# EUROPÄISCHE PATENTSCHRIFT

(11) **EP 2 865 118 B1**
(45) Veröffentlichungstag und Bekanntmachung des Hinweises auf die Patenterteilung: **31.08.2016**
(21) Anmeldenummer: 13737557.2
(22) Anmeldetag: 21.06.2013
(51) Int. Cl.: H04J 14/02

(54) **VERFAHREN ZUR ADAPTIVEN KONFIGURATION DES SENDESPEKTRUMS IN WDM-PONs**
METHOD FOR THE ADAPTIVE CONFIGURATION OF THE TRANSMISSION SPECTRUM IN WDM-PONS
PROCÉDÉ DE CONFIGURATION ADAPTATIVE DU SPECTRE D'ÉMISSION DANS DES RÉSEAUX PON MRL

(30) Priorität: 22.06.2012 DE 102012210581
(43) Veröffentlichungstag der Anmeldung: 29.04.2015
(73) Patentinhaber: Deutsche Telekom AG, 53113 Bonn (DE)
(72) Erfinder: BUNGE, Christian-Alexander, 04277 Leipzig (DE); LANGE, Christoph, 10781 Berlin (DE)
(74) Vertreter: Vossius & Partner Patentanwälte Rechtsanwälte mbB
(86) Internationale Anmeldenummer: PCT/EP2013/063041
(87) Internationale Veröffentlichungsnummer: WO 2013/190110

(56) Entgegenhaltungen:
- EP-A1- 2 200 202
- EP-A1- 2 472 760
- "Nokia Siemens Networks Future optical connectivity", , 10. April 2012 (2012-04-10), Seiten 1-8, XP055083832, Gefunden im Internet: URL:http://nsn.com/system/files/document/u dwdm_technical_wp_100412.pdf [gefunden am 2013-10-14]
- Alberto 4 Bianchi ET AL: "Survey of Next-Generation Optical Access System Concepts", , 21. Juni 2012 (2012-06-21), Seiten 1-168, XP55083858, Gefunden im Internet: URL:www.ict-oase.eu/public/files/OASE_D4_1 _WP4_EAB_210612_v3_0.pdf [gefunden am 2013-10-14]
- HARALD ROHDE ET AL: "Next generation optical access: 1 Gbit/s for everyone", 35TH EUROPEAN CONFERENCE ON OPTICAL COMMUNICATION, 2009. ECOC '09, VIENNA, AUSTRIA, IEEE, PISCATAWAY, NJ, USA, 20. September 2009 (2009-09-20), Seiten 1-3, XP031546541, ISBN: 978-1-4244-5096-1 in der Anmeldung erwähnt
- Erich Gottwald ET AL: "Machbarkeit kohärenter Einfaser-UDWM PONs mit 1000 Teilneh- mern und 100 km Reichweite", ITG-Fachtagung Photonische Netze, Paper 12, 05/2010, 3. Mai 2012 (2012-05-03), XP055083578, ISBN: 978-3-80-073249-4 Gefunden im Internet: URL:http://ieeexplore.ieee.org/ielx5/57554 75/5755476/05755977.pdf?tp=&arnumber=57559 77&isnumber=5755476 [gefunden am 2013-10-11] in der Anmeldung erwähnt

## Beschreibung

### Gebiet der Erfindung

Die vorliegende Erfindung bezieht sich auf das allgemeine Gebiet der Telekommunikation, insbesondere auf leitungsgebundene optische Zugangsnetze.

### Hintergrund der Erfindung

Der Energiebedarf und die Energieeffizienz von Telekommunikationsnetzen haben in jüngster Vergangenheit eine zunehmende Aufmerksamkeit erfahren. Es wird mit dem Blick auf das kritische Erfordernis nachhaltiger Ressourcennutzung auch für die Zukunft erwartet, dass ein energieeffizienter Netzbetrieb unabdingbar für Telekommunikationsnetzbetreiber und -dienstanbieter sein wird.

Insbesondere Zugangsnetze haben einen großen Anteil am Energiebedarf heutiger Telekommunikationsnetze, da die Netzelemente örtlich weit verteilt sind und das Netz über eine große Anzahl an aktiven - zumindest an den Rändern des Netzes - Komponenten verfügt. Passive optische Netze, PONs, werden von vielen Netzbetreibern als nächster Schritt in der Weiterentwicklung von Zugangsnetzen gesehen und werden derzeit ausgebaut, um zukunftssichere optische Zugangsnetze für hochbitratige Anwendungen zu gewährleisten.

Dabei wird davon ausgegangen, dass zunächst die Generation des *Gigabit-capable* PON [2] und anschließend die ebenfalls bereits standardisierte Variante XG-PON1 [4] zum Einsatz kommen werden. Diese PON-Varianten basieren auf einem optischen Verteilnetz, *Optical Distribution Network,* ODN, das als Zentralelement einen optischen Leistungskoppler verwendet, der wellenlängenunabhängig ist und die Signale vom zentralen Knoten gleichförmig - also nicht frequenz- bzw. wellenlängenselektiv - an alle Endknoten verteilt. Für die über das XG-PON1 hinausgehende Zukunft der leitungsgebundenen optischen Zugangsnetze werden PON-Varianten diskutiert, die das Wellenlängenmultiplexverfahren, *Wavelength-Division Multiplexing,* WDM, nutzen, um durch die Bereitstellung exklusiver Wellenlängenkanäle pro Endknoten höhere Übertragungsbitraten je Anschluss bereitstellen zu können. Von besonderem Interesse hierbei sind unter den verschiedenen in der Diskussion befindlichen Varianten solche, die das ewähnte - für G-PON und XG-PON1 ausgebaute - optische Verteilnetz weiterhin nutzen können und somit auch weiterhin einen passiven optischen Leistungskoppler mit verwenden können. Dadurch können die teils sehr hohen finanziellen Aufwendungen, die ein flächendeckender Ausbau eines Glasfaserzugangsnetzes erfordert, über einen längeren Zeitraum geschützt werden. Ein derartiges Verfahren ist das auf kohärenten Überlagerungsempfängern basierende UDWDM-PON, das der vorliegenden Erfindungsbeschreibung zu Grunde liegt [1].

### Zitierter Stand der Technik

[1] H. Rohde et al., "Next generation Optical Access: 1 Gb/s for Everyone," in Proceedings European Conference on Optical Communication (ECOC) 2009, Paper 10.5.5.
[2] Keiser, Gerd: FTTX - Concepts and Applications. Hoboken, NJ: Wiley, 2006 (Seite 13-14)
[3] ITU-T Series G. Supplement 45: Means and impact of GPON power saving. White Paper, Genf, 2009
[4] ITU-T Series G, G.987: 10-Gigabit-capable passive optical networks, Genf, 2010
[5] E. Gottwald, H. Rohde, S. Smolorz, "Machbarkeit kohärenter Einfaser- UDWDM PONs mit 1000 Teilnehmern und 100 km Reichweite," 11. ITG-Fachtagung Photonische Netze, Paper 12, 05/2010.
[6] Klaus Grobe, Jörg-Peter Elbers: PON in Adolescence: From TDMA to WDM-PON. IEEE Communications Magazine, S. 26-34, Januar 2008
[7] EP 2 472 760 A1, EP2 200 202 A1, Technical White Paper, Nokia Siemens Networks: Future optical connectivity, 10.April 2012, Seiten 1-8.

### Zusammenfassung der Erfndung

Vor dem Hintergrund des relativ gesehen großen Anteils der Zugangsnetze am Gesamtenergieverbrauch der Telekommunikationsnetze und des auf längere Sicht vielversprechenden Ansatzes kohärenter WDM-PON-Technik ist es für Netzbetreiber von besonderem praktischem Interesse im Hinblick auf Nachhaltigkeit und Wirtschaftlichkeit, die Energieeffizienz von diesen zukünftigen PON-Systemen zu steigern.

Der vorliegenden Erfindung liegt die Aufgabe zugrunde, ein Verfahren und eine Vorrichtung zur Übertragung eines Sendesignals in optischen Netzen bereitzustellen, wobei die Energieeffizienz verbessert wird. Diese Aufgabe wird mit den Merkmalen der unabhängigen Ansprüche gelöst. Die abhängigen Ansprüche betreffen Weiterbildungen der Erfindung.

Die Erfindung beruht darauf, bei kohärent im Wellenlängenmultiplexverfahren betriebenen passiven optischen Netzen, WDM-PON, das Sendespektrum im vermittlungsseitigen Netzelement OLT, *"Optical Line Termination*", so flexibel zu konfigurieren, dass auf der Grundlage der zeitlich variierenden Verkehrsanforderungen Komponenten im OLT lastadaptiv zu- und abgeschaltet werden können, um eine verbesserte Energieeffizienz des Netzbetriebs zu erreichen. Erfindungsgemäß wird die zur Verfügung gestellte Übertragungskapazität an den jeweiligen aktuell vorliegenden Verkehrsbedarf angepasst, um die Energieeffizienz durch die Nutzung möglichst weniger Laser zu steigern. Hierzu werden adaptive Mechanismen eingesetzt, die nachstehend beschrieben werden.

Gemäß einem Aspekt der Erfindung wird ein Verfahren zur adaptiven Konfiguration eines Sendesignals in einem kohärenten WDM-PON mit einer optischen Leitungsterminierung und mehreren Endknoten bereitgestellt. Das Verfahren weist folgende Schritte auf: a) Erzeugen des Sendesignals mit mindestens *m* Lasern, denen jeweils ein optisches Sendespektrum mit *p* zugehörigen Spektralbereichen zugeordnet ist, wobei jeweils ein Spektralbereich des Sendesignals zum Übertragen von Daten in dem kohärenten WDM-PON an einen zugeordneten von *kₐ* aktiven Endknoten geeignet ist, wobei jeweils einer der *kₐ* aktiven Endknoten einem Spektralbereich der *m* Laser zugeordnet ist und wobei *kₐ* ≤ *m·p* ist, *m* = {1,2,3,4,...}und *p =* {1,2,3,4,...} sind; b) Überwachen der Anzahl *kₐ* der aktiven Endknoten; c) Neuzuordnen der aktiven Endknoten, die einem Spektralbereich eines abzuschaltenden Laser zugeordnet sind, auf jeweils einen freien Spektralbereich der übrigen Laser, wenn sich die Anzahl der aktiven Endknoten auf *kₐ* ≤ (*m* -1) · *p* verringert, d) Bekanntmachen der neuen Zuordnung der Spektralbereiche, und e) Abschalten des abzuschaltenden Lasers.

Vorzugsweise weist das Verfahren nach der vorliegenden Erfindung ferner einen Schritt auf: Modulieren der optischen Trägerwelle jedes der *m* Laser mit einem elektrischen Frequenzkamm, sodass jede optische Trägerwelle mehrere elektrische Subträger mit Spektralbereichen für das Übertragen der Daten an mehrere Endknoten aufweist, wobei die Sendespektren aufeinanderfolgend angeordnet sind.

Vorzugsweise weist das Verfahren nach der vorliegenden Erfindung ferner einen weiteren Schritt auf: f) Zuschalten eines Lasers, wenn sich die Anzahl der aktiven Endknoten auf *kₐ* > (*m* + 1) · *p* erhöht.

Vorzugsweise wird das Bekanntmachen im Schritt d) durch Versenden einer gemeinsamen Nachricht an alle Endknoten durchgeführt.

Vorzugsweise wird das Bekanntmachen im Schritt d) durch Versenden einer Nachricht an den/die Endknoten, die einem abzuschaltenden Laser zugeordnet sind durchgeführt.

Nach einem anderen Aspekt stellt die vorliegende Erfindung eine Vorrichtung zur Durchführung des Verfahrens bereit, das hierin beschrieben wird.

### Kurze Beschreibung der Figuren

Die Erfindung wird nachfolgend anhand den beigefügten Figuren beispielhaft näher erläutert.
Fig. 1 zeigt schematisch ein Zugangsnetz auf Basis eines passiven Leistungskoppler-basierten optischen Netzes;
Fig. 2 zeigt ein Blockschaltbild eines OLTs für kohärente WDM-PONs, wobei vier Trägerfrequenzen bzw. Kanälen pro Wellenlänge beispielhaft dargestellt werden;
Fig. 3 zeigt eine Verteilung der Trägerfrequenzen des Sendespektrums auf mehrere Laser;
Fig. 4 zeigt das Prinzip der Umverteilung der Trägerfrequenzen des Sendespektrums im OLT nach dem erfindungsgemäßen Verfahren ; und
Fig. 5 zeigt ein Ablaufdiagramm zur Neuanordnung der Sendefrequenzen gemäß einer Ausführungsform der Erfindung.

### Detaillierte Beschreibung der Erfindung

Ein Aspekt des Verfahrens nach der vorliegenden Erfindung beruht darauf, die Trägerfrequenzen von aktiven Endpunkten in einem WDM-PON so zu gruppieren, dass die Trägerfrequenzen der Endknoten, die zeitweise nicht aktiv sind, auf spektralen Bereichen zusammengefasst werden, die nicht mehr versorgt werden müssen. Die flexible und adaptive Umgruppierung der jeweiligen Trägerfrequenzen der aktiven Endknoten lässt sich dadurch realisieren, dass das Spektrum des von dem OLT zu sendenden Signals in optischen Zugangsnetzen mit optischen Überlagerungsempfängern digital erzeugt wird und somit die Trägerfrequenzen als elektrische Subträger beliebig in Spektrum umgruppiert werden können. Diese Technik ist in WDM-Systemen mit Wellenlängenselektion am Empfänger möglich, die im optischen Verteilnetz (*Optical Distribution Network,* ODN) keine wellenlängenabhängigen Koppler aufweisen, sondern wo die Wellenlängenselektion erst am Empfänger selbst stattfindet. Dazu ist das optische Verteilnetz als Sternnetz ausgelegt, in dem das vom zentralen Punkt ausgehende Signal an alle Endknoten gleichermaßen gesendet wird (*broadcast*). Ein Beispiel für so ein optisches Netz ist das UDWDM-PON (*Ultra-Dense WDM-PON*) [1].

Im dem Falle, dass einige Endknoten in einen inaktiven Zustand übergehen und nur noch wenige restliche Verbindungen zwischen dem zentralen Punkt und den Endknoten aufrecht erhalten werden müssen, kann man die Trägerfrequenzen dieser aktiven Knoten so zusammenfassen, dass sie von möglichst wenigen Lasern erzeugt werden können. Die restlichen Laser, die für die Erzeugung aller Trägerfrequenzen notwendig wären, wenn alle Endknoten aktiv sind, können dann abgeschaltet, und es kann somit Energie eingespart werden. Hinzu kommt, dass nicht nur die optische Schnittstelle in Form der Laser, sondern auch die elektrische Signalverarbeitung zur Erzeugung des Ansteuersignals und zur Erzeugung der Datenpakete abgeschaltet werden können, was eine noch höhere Energieeinsparung ermöglicht.

Für glasfaserbasierte Zugangsnetze ist das Konzept des passiven optischen Netzes ein verbreiteter Ansatz, um kostengünstig hochbitratigen Teilnehmerzugang bereitzustellen.

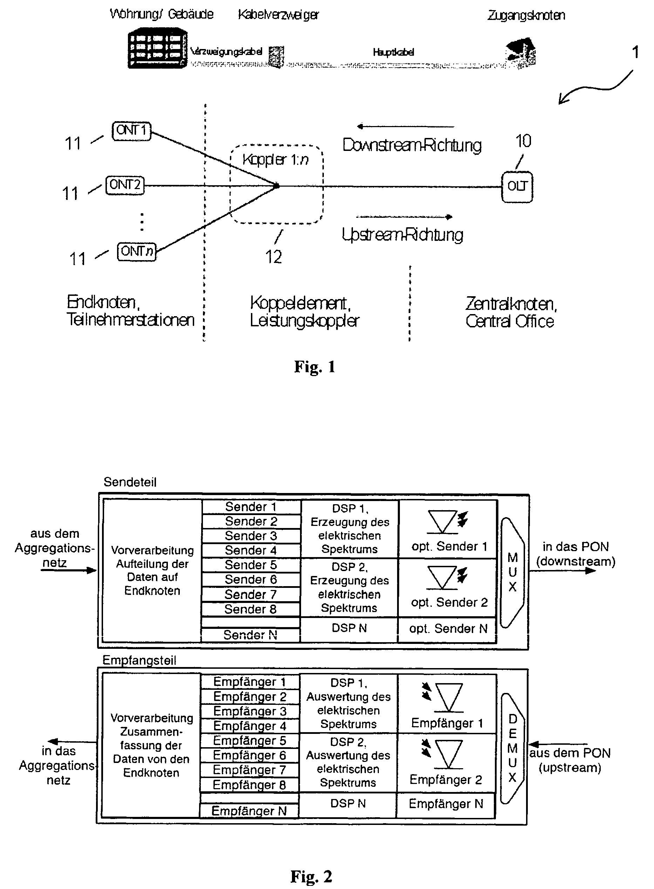

Fig. 1 zeigt in schematischer Form eine dem Stand der Technik entsprechende Anordnung. Der OLT, *Optical Line Termination,* 10 sendet Signale in Richtung der Teilnehmerstationen ONT, *Optical Network Termination, 11.*

Der Leistungskoppler 12 ist das Zentralelement des PONs und teilt das vom OLT kommende Signal im Downstream auf alle ONTs auf. Dabei werden die Signale vom OLT an die Endknoten im Zeitmultiplex verteilt, sodass jeder Endknoten das gleiche Signal erhält und sich über die Wahl eines Zeitschlitzes das für sich bestimmte Signal ermittelt. Im Upstream wird das von den ONTs kommende Signal ebenfalls im Zeitmultiplexverfahren gesendet. Hierbei ist nur zu beachten, dass die ONTs so synchronisiert werden, dass sich die Signale von verschiedenen Endknoten am zentralen Leistungskoppler nicht zeitlich überlappen. Ein PON besitzt also system-inhärent eine Sternstruktur - im Gegensatz zu sonst üblichen Punkt-zu-Punkt-Verbindungen -, was Auswirkungen auf das Funktionsprinzip hat. Prinzipbedingt arbeiten alle ONTs mit der PON-Systembitrate, also z. B. mit 2,5 Gbit/s bei GPON-Systemen [2] bzw. 10 Gbit/s bei XG-PON1-Systemen [4], obwohl je Teilnehmer - abhängig vom Aufteilungsverhältnis 1:*n* - nur geringere Bitraten nutzbar sind. Zudem sollen alle Endstellen, OLT und die ONTs, bei der maximalen Gesamtdatenrate arbeiten, da die Selektion der Daten pro Endstelle erst nach dem eigentlichen optischen Empfang geschieht. Typische Größen für *n* sind derzeit 32 oder 64.

Viele dieser Nachteile kann man mit Wellenlängenmultiplex als Zugriffsverfahren verhindern. Bei "klassischen" WDM-PONs erhält jeder Endknoten eine Wellenlänge zugeteilt, die dieser exklusiv für die Datenübertragung nutzen kann. Die Endknoten müssen somit nur noch die für sie bestimmten Daten empfangen, wodurch die Anforderungen an die Bandbreite bzw. Geschwindigkeit der Komponenten deutlich sinkt. Zudem werden nur noch die Signale an die jeweiligen Endknoten geleitet, die auch wirklich für sie bestimmt sind. Dadurch ergeben sich deutlich geringere Verluste als in einem PON mit Leistungskopplern, die je nach Kopplungsverhältnis nur noch einen Bruchteil der Leistung an die jeweiligen Ausgangsarme weiterleiten. Beides zusammen ermöglicht die Erhöhung der Datenrate pro Endknoten, der Zahl der Endknoten - Splitting-Verhältnis - und auch der maximalen Verbindungslänge [6].

Neben dieser Vielzahl an Vorteilen weist dieser Ansatz des klassischen WDM-PONs aber auch Nachteile auf: Zum einen muss nun der zentrale Leistungskoppler durch einen wellenlängenabhängigen Splitter (typischerweise ein AWG, *Arrayed Waveguide Grating)* ausgetauscht werden, was eine Änderung der Netztopologie erfordert und somit die uneingeschränkte Weiternutzung bereits bestehender Netze verhindert. Zum anderen müssen die optischen Komponenten der ONTs so gestaltet werden, dass sie bei jeweils anderen Wellenlängen arbeiten in Abhängigkeit davon, an welchem Ast des Sternnetzes sich der betreffende ONT befindet.

Mit der Nutzung kohärenter optischer Empfangstechnik lassen sich die Vorteile von WDM-PONs nutzen und die genannten Nachteile vermeiden. Bei UDWDM-PONs werden die von der zentralen OLT gesendeten Signale weiterhin gleichförmig an alle Endknoten mittels Leistungskoppler verteilt [5]. Die Netztopologie kann gegenüber Fig. 1 unverändert bleiben. Damit muss die passive Netzinfrastruktur (Glasfaserkabel und Splitter) nicht kostenintensiv umgebaut werden, genügt es, die Systemtechnik (OLT und ONT) zu ersetzen.

Die Signale für die einzelnen Endknoten werden auf unterschiedliche Subträger moduliert, die sich in ihrer jeweiligen Trägerfrequenz unterscheiden. Je nach Zahl der zu verwendenden Subträger und damit verbundenen Gesamtbandbreite müssen die verschiedenen Subträger eventuell auf mehrere Laser aufmoduliert werden, da die Modulationsbandbreite pro Wellenlänge zurzeit auf deutlich unter 100 GHz beschränkt ist. Dadurch ergibt sich, dass immer mehrere Subträger zu Blöcken zusammengefasst werden, die einer speziellen Wellenlänge bzw. einem Laser zugeordnet sind. Der Empfang der Signale von den verschiedenen Endknoten geschieht dann in gleicher Weise. Das Spektrum des Gesamtsignals von allen Endknoten wird in kleinere Blöcke aufgeteilt, die dann von einer Fotodiode empfangen und von der Elektronik im Ganzen ausgewertet werden können. Diese Aufteilung des Gesamtspektrums geschieht zweckmäßigerweise durch einen wellenlängenabhängigen optischen Teiler. Die parallele Verarbeitung geschieht dann in Wellenlängenblöcken. Das Prinzip der Signalerzeugung und des -empfangs an der OLT in kohärenten WDM-PONs ist an Hand eines Blockschaltbildes in Fig. 2 gezeigt.

Die eigentliche Wahl der zu empfangenden Wellenlänge geschieht erst am Überlagerungsempfänger im Endknoten selbst [1], [5]. Der Überlagerungsempfänger enthält einen Lokaloszillator dessen Wellenlänge variiert werden kann. Mit Hilfe dieses Lokaloszillators kann die zu empfangende Wellenlänge ausgewählt werden. Durch Überlagerung des Empfangssignals mit dem Signal des Lokaloszillators und anschließender Umwandlung in ein elektrisches Signal durch eine Fotodiode wird das optische Empfangssignal auf eine Zwischenfrequenz *f*_{ZW} = |*f*_{S} - *f*_{LO}| mit der Signalfrequenz *f*_{S} und der Lokaloszillatorfrequenz *f*_{LO} heruntergemischt. Für das Senden (ONT-seitig) im Upstream wird der Laser im Lokaloszillator mit der Frequenz *f*_{LO} verwendet, sodass die beiden Trägerfrequenzen für Upstream (*f*_{LO}) und Downstream automatisch immer einen festen Abstand zu einander aufweisen, aber ansonsten durch Einstellen der Wellenlänge am Lokaloszillator frei gewählt werden können. Bei direkter Verwendung des Lokaloszillators hätten Up- und Downstream dieselbe Wellenlänge bzw. Frequenz. Durch Hochmischen des Up- oder Downstream-Signals mittels elektrischen Mischers kann man auch einen festen Frequenzabstand erreichen, der nicht durch die Eigenschaften des Lasers (Wellenlängenverschiebung durch Temperaturänderung etc.) beeinflusst wird.

Das Downstream-Signal von der OLT wird - im Gegensatz zu einem konventionellen WDM-PON - nicht durch die Modulation verschiedener optischer Wellenlängen realisiert, die durch verschiedene Laser erzeugt wurden, sondern digital durch Erzeugung eines elektrischen Frequenzkamms. Die Trägerfrequenzen für die verschiedenen Endknoten des Netzes ergeben sich dann als elektrische Subträger die digital erzeugt werden. So lassen sich mit einem Laser mehrere Endknoten bedienen, indem die optische Trägerwellenlänge des Lasers mit einem elektrischen Frequenzkamm moduliert wird, der i. A. digital erzeugt wurde und dessen Subträger die Signale für die einzelnen Endknoten tragen. Da die Modulationsbandbreite pro Wellenlänge begrenzt ist (zurzeit auf unter 100 GHz), sollen mehrere Laser mit verschiedenen Wellenlängen genutzt werden, die jeweils mit elektrischen Subträgern moduliert werden.

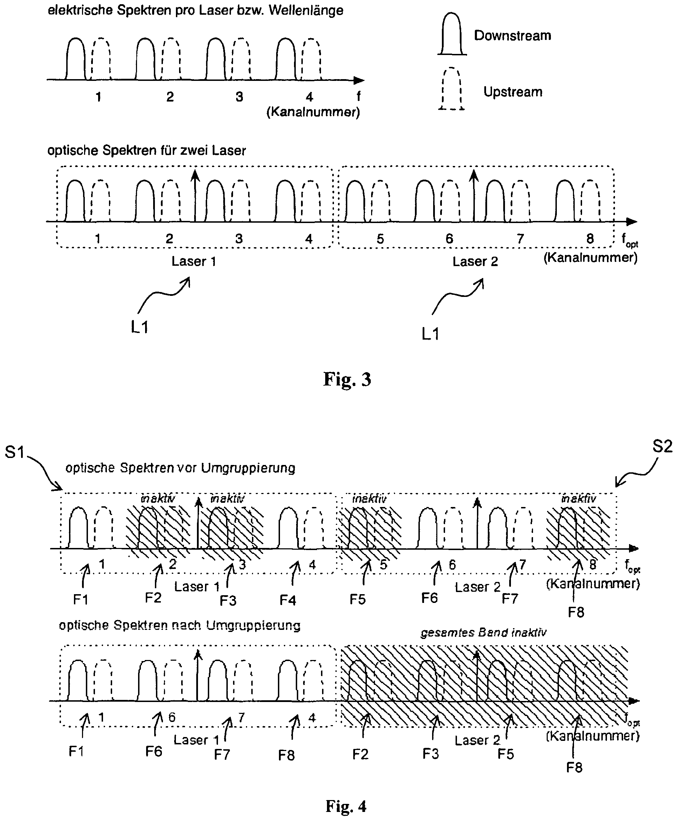

Wenn man z. B. von einer Kanalbandbreite von 1 GHz pro Kunde und Richtung ausgeht und zudem einen Sicherheitsabstand (Guardband) von 1 GHz zwischen jeweils zwei Kunden vorsieht, werden pro Endknoten ca. 3 GHz an Spektrum benötigt. Wenn man dann von einer maximalen Modulationsbandbreite pro Wellenlänge von z. B. 30 GHz ausgeht, kann man pro Laser bis zu zehn Endknoten bedienen. In Fig. 3 ist das OLT-Sendespektrum gezeigt, wie es dem Stand der Technik entspricht, wobei der Übersichtlichkeit halber nur von zwei Lasern mit jeweils vier Endknoten pro Wellenlänge ausgegangen wurde. Für diese beispielhaften acht Endknoten wären dann zwei Laser verschiedener Wellenlänge notwendig, sodass die Endknoten in zwei Gruppen mit je vier Endknoten pro Wellenlänge aufgeteilt werden könnten. Mit anderen Worten hat die in Fig. 3 und 4 dargestellte Ausführungsform der vorliegenden Erfindung hinsichtlich des Gegenstand der oben allgemein beschriebenen Erfindung folgende Zahlenwerte: *m=2, p=4,* und *kₐ* =8.

Der Verkehrsbedarf je Teilnehmer fluktuiert zeitlich mitunter stark, z. B. im Verlaufe eines Tages (Tag/Nacht), einer Woche (Arbeitstag/Wochenende) oder eines Jahres (z. B. Urlaubszeit oder Feiertage). Erfindungsgemäß wird zur Steigerung der Energieeffizienz die tatsächlich zu übertragende - und zu verarbeitende - Bitrate dem wirklichen Verkehrsbedarf angepasst, da der Leistungsbedarf von elektronischen und optischen Komponenten mit der zu übertragenden und zu verarbeitenden Bitrate verkoppelt ist - und z. B. bei steigender Bitrate ebenfalls steigt.

Es gibt bereits definierte Maßnahmen zur Steigerung der Energieeffizienz bei PONs: In [3] finden sich Maßnahmen für die auf dem Zeitmultiplexverfahren basierenden PON-Varianten, insbesondere für G-PON, die dann in den XG-PON1-Standard [4] mit Eingang gefunden haben. Alle diese Maßnahmen beziehen sich jedoch auf die ONT/ONU-Seite, da diese relativ leicht in Abhängigkeit von der Nutzeraktivität aktiviert oder auch in einen Schlafmodus versetzt werden kann, da sie im Falle der direkten Glasfaseranbindung von Haushalten immer nur jeweils einen Haushalt betrifft.

Für die OLT-Seite werden bisher keine lastadaptiven Mechanismen zur Steigerung der Energieeffizienz vorgesehen, da es schwierig ist, in der sternförmigen PON-Struktur einen für mehrere Anschlüsse verantwortlichen PON-Port lastadaptiv in der Bitrate zu steuern. Die Situation wird mit einer Steigerung der Teilnehmerzahlen pro OLT sogar noch schwieriger, da bei einer höheren Anzahl von Endknoten die Wahrscheinlichkeit, dass alle Endknoten gleichzeitig in einen Schlafmodus überwechseln, immer kleiner wird. Deshalb betreibt man in derzeitigen PONs den OLT-PON-Port immer mit der nominalen vollen Systembitrate - was natürlich auch immer, unabhängig von der tatsächlichen Aktivität, die volle Leistung erfordert.

Mit dem Verfahren nach der vorliegenden Erfindung soll nicht mehr die OLT als ganzes in einen Modus niedrigeren Energieverbrauchs überführt werden, sondern die benötigten Funktionen in der OLT so zusammengefasst und umgruppiert werden, dass man einzelne Teile der OLT gezielt abschalten oder in einen Energiesparmodus überführen kann und so auch am zentralen Knoten des Netzes Energie eingespart werden kann.

Das Verfahren nach der vorliegenden Erfindung beruht darauf, dass die Zuweisung der Wellenlängen für jeden Endkunden adaptiv gesteuert werden kann. Diese dynamische Zuordnung wird in WDM-PONs mit kohärenter Empfangstechnik dadurch ermöglicht, dass das Sendesignal an der OLT einen digital erzeugten und modulierten Frequenzkamm aufweist, der durch einfaches Umprogrammieren der Ansteuerelektronik jederzeit geändert werden kann. Außerdem ist durch den Überlagerungsempfänger eine freie Wahl der zu empfangenden Wellenlänge möglich, da dazu nur der Lokaloszillator im Empfänger auf die jeweilige zu empfangende Wellenlänge einzustellen ist.

Wenn im PON ein oder mehrere Endknoten in den Schlafmodus übergehen, kann durch gezielte Umgruppierung der Träger-Wellenlängen der noch aktiven Endknoten im OLT das Spektrum so angeordnet werden, dass nicht mehr alle Laser der OLT zur Signalerzeugung genutzt werden müssen. Wenn, wie oben beschrieben, z. B. 1000 Endknoten mit jeweils ca. 3 GHz Bandbreite pro ONT adressiert werden sollen, so werden insgesamt 3 THz Bandbreite benötigt. Ein Signal mit so breitem Spektrum kann nicht von einem einzigen Modulator erzeugt werden. Das Spektrum wird z. B. auf 100 verschiedene Wellenlängen verteilt, die jeweils mit einem Modulator mit einer Bandbreite von 30 GHz moduliert werden. So kann ein Laser jeweils 10 Endknoten ansprechen. Ein vereinfachtes Beispiel für ein solches Spektrum und die Aufteilung auf zwei verschiedene Laser mit jeweils vier Endknoten pro Wellenlänge ist in Fig. 4 dargestellt. Wenn nun z. B. vier Endknoten in den Schlafmodus übergehen, können insgesamt diese vier Spektralbereiche ungenutzt bleiben. Das Spektrum, in dem i. A. die frei gewordenen Bereiche beliebig verteilt sein können, muss anschließend so umgruppiert werden, dass die vier Spektralbereiche das Spektrum einer Gruppe vollständig belegen. Man kann auch sagen, dass die restlichen genutzten Spektralbereiche so umarrangiert werden sollen, dass sie einen kompakten, zusammenhängenden Spektralbereich belegen, der insgesamt eine schmalere Bandbreite umfasst. Dadurch lässt sich das nun spektral schmalere Gesamtsignal mit weniger Lasern (in unserem Beispiel verringert sich die Zahl der benötigten Laser um einen) erzeugen, wobei die restlichen Laser, Modulatoren, elektrische Ansteuerung und digitale Vorverarbeitung abgeschaltet werden können.

Fig. 4 zeigt eine Realisierungsmöglichkeit für das Spektrum vor und nach der Neuanordnung des Spektrums aus obigem Beispiel. Im Vergleich zur Fig. 3 sind hier 4 Endknoten inaktiv geworden, d.h. *kₐ* verringert sich von 8 auf 4, so dass die Spektralbereiche der Laser neu umgruppiert werden sollen. Die optischen Spektren S1 und S2 der Laser L1 und L2 umfassen jeweils vier Spektralbereiche F1, F2, F3, F4 und F5, F6, F7, F8. Vor der Umgruppierung hat jedes Spektrum zwei Spektralbereiche F2 und F3 bzw. F5 und F8, die den inaktiven Endknoten zugeordnet sind. Ohne eine Umgruppierung der Spektralbereiche sind beide Laser L1 und L2 notwenig, um die vier noch aktiven Endknoten zu versorgen. Nach der Umgruppierung weist das Spektrum des Lasers L1 lediglich Spektralbereiche F1, F6, F7 und F4, die den noch aktiven Endknoten zugeordnet sind, und das Spektrum des Lasers L2 ist ausschließlich mit inaktiven Spektralbereiche F2, F3, F5 und F8 belegt. Daher kann der Laser L2 abgeschaltet werden, wodurch Energie gespart werden kann.

Die neue Zuordnung der Wellenlängen zu den jeweiligen Endknoten soll im Netz bekannt gemacht werden. Das kann auf verschiedene Arten umgesetzt werden. Man kann für die Veröffentlichung der neuen Zuordnung im Netz die Tatsache nutzen, dass alle Endknoten das gleiche Signal erhalten, weil das Verteilnetz mit Leistungskopplern aufgebaut ist. Dadurch ist ein Broadcast zu allen Teilnehmern einfach zu realisieren. Dadurch wäre es möglich, wellenlängenunabhängig an alle Endknoten gleichzeitig zu senden. Die Information ließe sich auch z. B. als Sendesignal mit einem geeigneten Protokoll in der gleichen Art und Weise an alle ONTs übertragen wie auch die Nutzsignale selbst. Aus Effizienzgründen könnte man auch nur die Endknoten ansprechen, deren Trägerwellenlänge umgestellt werden soll, und dieser ihre neue Kanalnummer durchgeben.

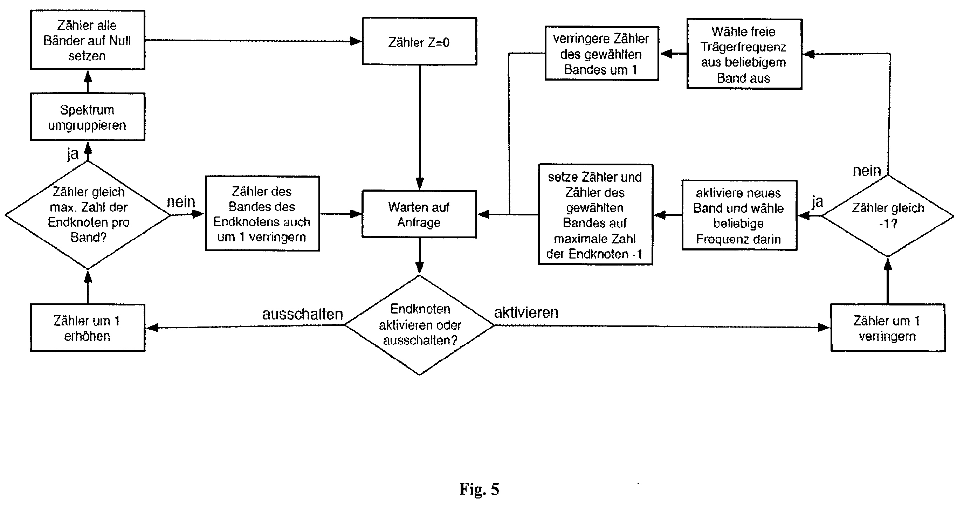

Nach der Neuanordnung des Spektrums bleibt diese Zuordnung der Wellenlängen erhalten. Falls von den Endknoten, die in den Schlafmodus übergewechselt sind, wieder einige aktiv werden, kann man diesen eine der freien Wellenlängen zuweisen. Dabei müsste i. A. allerdings ein Laser wieder hinzugenommen werden, wodurch die Energieeinsparung dann nicht mehr gegeben ist: Es wird wieder in einen Normalbetriebsmodus gewechselt. Eine neue Umgruppierung des Spektrum wird erst wieder nötig, wenn genügend viele Endknoten inaktiv geworden sind, dass wieder ein kompletter Spektralbereich frei würde, der von einem Laser versorgt werden kann. Im Beispiel oben entspräche das zehn weiteren Endknoten. Zur Kontrolle der frei gewordenen Spektralbereiche kann ein Zähler im OLT eingerichtet werden, der die Zahl der frei gewordenen Spektralbereiche protokolliert und bei Erreichen eines Schwellwertes (hier 10) die Neuanordnung des Sendespektrums veranlasst und zurückgestellt wird. Wenn ein vormals inaktiver Endknoten wieder aktiv wird, wird dieser Zähler um eins verringert werden. Fig. 5 zeigt ein Ablaufdiagramm für diesen Vorgang.

Das Verfahren nach der vorliegenden Erfindung stellt die Möglichkeit bereit, in kohärenten WDM-PONs die OLT-Sendespektren lastadaptiv umzukonfigurieren. So wird es möglich, in Zeiten schwacher Verkehrslast die Sendespektren so zu konfigurieren, dass die gegebenenfalls über alle Laser verteilten Sendedatenströme so vorverarbeitet werden, dass sie neu zusammengefasst werden können und damit weniger Laser benötigt werden, als bei voller Verkehrslast notwendig sind. Dadurch können die nicht mehr benötigten Laser abgeschaltet werden inklusive der dazugehörigen Elektronik zur Ansteuerung und Signalverarbeitung, so dass während einer Periode verringerter Verkehrslast die OLT-seitig verbrauchte Leistung gesenkt werden kann.

Das Verfahren richtet sich insbesondere gezielt an UDWDM-PONs, die eine drastische Erhöhung der Verbraucherzahlen bzw. der Anzahl der Endknoten ermöglichen. Gerade bei einer großen Zahl von Endknoten sind bekannte Maßnahmen zur Energieeinsparung, die in Punkt-zu-Punkt-Verbindungen eingesetzt werden, ineffektiv. Erst die Ausnutzung der digitalen Signalerzeugung am Sender und durch die dadurch ermöglichte adaptive Anpassung des Sendespektrums bzw. die Neuzuweisung der Trägerfrequenzen für die einzelnen Endknoten lässt sich in einem großen Sternnetz mit vielen Endknoten eine signifikante Energieeinsparung realisieren.

Während die bekannten Verfahren den Energieverbrauch an der ONT zu verringern suchen, zielt das Verfahren nach der vorliegenden Erfindung insbesondere auf die Energieeinsparung am zentralen OLT ab. Neben dieser Maßnahme lassen sich alle weiteren ONT-seitigen Verfahren zur Energieeinsparung mit der vorliegenden Erfindung kombinieren.

Während die vorliegende Erfindung hier unter Bezug auf ihre bevorzugten Ausführungsformen beschrieben und dargestellt wurde, ist für Fachleute auf dem Gebiet offensichtlich, dass verschiedene Modifikationen und Änderungen daran vorgenommen werden können, ohne den Schutzbereich der Erfindung zu verlassen. Auf diese Weise ist beabsichtigt, dass die vorliegende Erfindung die Modifikationen und Änderungen dieser Erfindung abdeckt, sofern sie in den Schutzbereich der beigefügten Patentansprüche und ihrer Äquivalente fallen.

## Patentansprüche

1. Verfahren zur adaptiven Konfiguration eines Sendesignals in einem kohärenten WDM-PON (1) mit einer optischen Leitungsterminierung (10) und mehreren Endknoten (11), wobei das Verfahren folgende Schritte aufweist:
a) Erzeugen des Sendesignals mit mindestens *m* Laser (L), die jeweils einem optischen Sendespektrum (S1, S2) mit *p* zugehörigen Spektralbereichen (F1 bis F4; F5 bis F8) zugeordnet sind, wobei jeweils ein Spektralbereich des Sendesignals zum Übertragen von Daten in dem kohärenten WDM-PON an einen zugeordneten von *kₐ* aktiven Endknoten geeignet ist, wobei jeweils einer der *kₐ* aktiven Endknoten einem Spektralbereich der *m* Laser (L) zugeordnet ist und wobei *kₐ* ≤ *m · p* ist, *m* = {1,2,3,4,...} und *p* = {1,2,3,4,...} sind,
b) Überwachen der Anzahl *kₐ* der aktiven Endknoten,
c) wenn sich die Anzahl der aktiven Endknoten auf *kₐ* ≤ (*m* - 1) *· p* verringert:
c1) Neuzuordnen der aktiven Endknoten, die einem Spektralbereich eines abzuschaltenden Laser (L2) zugeordnet sind, auf jeweils einen freien Spektralbereich der übrigen Laser (L),
c2) Bekanntmachen der neuen Zuordnung der Spektralbereiche durch Versenden einer Nachricht an den/die Endknoten (11), die einem abzuschaltenden Laser zugeordnet sind,
c3) Abschalten des abzuschaltenden Lasers (L2),
d) wenn sich die Anzahl der aktiven Endknoten auf *kₐ >* (*m* + 1) · *p* erhöht:
Zuschalten eines Lasers.

2. Verfahren nach Anspruch 1, ferner mit folgendem Schritt:
Modulieren der optischen Trägerwelle jedes der *m* Laser mit einem elektrischen Frequenzkamm, sodass jede optische Trägerwelle mehrere elektrische Subträger mit Spektralbereichen (F1 bis F4, F5 bis F8) für das Übertragen der Daten an mehrere Endknoten (11) aufweist, wobei die Sendespektren (S1, S2) aufeinanderfolgend angeordnet sind.

3. Vorrichtung zur adaptiven Konfiguration eines Sendesignals in einem kohärenten WDM-PON (1) mit einer optischen Leitungsterminierung (10) und mehreren Endknoten (11), wobei die Vorrichtung aufweist:
a) eine Einrichtung zum Erzeugen des Sendesignals mit mindestens *m* Laser (L), die jeweils einem optischen Sendespektrum (S1, S2) mit *p* zugehörigen Spektralbereichen (F1 bis F4; F5 bis F8) zugeordnet sind, wobei jeweils ein Spektralbereich des Sendesignals zum Übertragen von Daten in dem kohärenten WDM-PON an einen zugeordneten von *kₐ* aktiven Endknoten geeignet ist, wobei jeweils einer der *kₐ* aktiven Endknoten einem Spektralbereich der *m* Laser (L) zugeordnet ist und wobei *kₐ* ≤ *m · p* ist, *m* = {1,2,3,4,...}und *p =* {1,2,3,4,...} sind,
b) eine Einrichtung zum Überwachen der Anzahl *kₐ* der aktiven Endknoten,
c) eine Einrichtung zum Neuzuordnen der aktiven Endknoten, die einem Spektralbereich eines abzuschaltenden Laser (L2) zugeordnet sind, auf jeweils einen freien Spektralbereich der übrigen Laser (L), wenn sich die Anzahl der aktiven Endknoten auf *kₐ* ≤ (*m* - 1) *· p* verringert,
d) eine Einrichtung zum Bekanntmachen der neuen Zuordnung der Spektralbereiche durch Versenden einer Nachricht an den/die Endknoten (11), die einem abzuschaltenden Laser zugeordnet sind, und
e) eine Einrichtung zum Abschalten des abzuschaltenden Lasers (L2)
f) einer Einrichtung zum Zuschalten eines Lasers, wenn sich die Anzahl der aktiven Endknoten auf *kₐ > (m* + 1) *p* erhöht.

4. Vorrichtung nach Anspruch 3, ferner mit:
einer Einrichtung zum Modulieren der optischen Trägerwelle jedes der m Laser mit einem elektrischen Frequenzkamm, sodass jede optische Trägerwelle mehrere elektrische Subträger mit Spektralbereichen (F1 bis F4, F5 bis F8) für das Übertragen der Daten an mehrere Endknoten (11) aufweist, wobei die Sendespektren (S1, S2) aufeinanderfolgend angeordnet sind.

## Claims

1. A method for the adaptive configuration of a transmission signal in a coherent WDM-PON (1) having an optical line termination (10) and several end nodes (11), wherein the method comprises the following steps:
(a) generating the transmission signal by means of at least *m* lasers (L), which are each associated with a respective optical transmission spectrum (S1, S2) having *p* associated spectral ranges (F1 to F4; F5 to F8), wherein a spectral range of the transmission signal is suitable for transmitting data in the coherent WDM-PON to an associated active end node of *kₐ* active end nodes, wherein a respective active end node of the *kₐ* active end nodes is associated with a spectral range of the *m* lasers (L) and wherein *kₐ*≤*m·p, m*={1,2,3,4,...} and *p*={1,2,3,4,...},
(b) monitoring the number *kₐ* of active end nodes,
(c) if the number of active end nodes is reduced to *kₐ*≤*(m-1)·p*;
(c1) reassigning the active end nodes associated with a spectral range of a laser (L2) to be switched off to a respective free spectral range of the remaining lasers (L),
(c2) announcing the new assignment of the spectral ranges by transmitting a message to the end node(s) (11) which are assigned to a laser to be switched off,
(c3) switching off the laser (L2) to be switched off,
(d) if the number of active end nodes increases to *kₐ>(m*+*1)·p*:
switching on a laser.

2. The method according to claim 1, further comprising the following step:
modulating the optical carrier wave of each of the *m* lasers with an electrical frequency comb so that each optical carrier wave comprises several electrical subcarriers with spectral ranges (F1 to F4, F5 to F8) for transmitting data to several end nodes (11), wherein the transmission spectra (S 1, S2) are arranged successively.

3. An apparatus for the adaptive configuration of a transmission signal in a coherent WDM-PON (1) having an optical line termination (10) and several end nodes (11), wherein the apparatus comprises:
(a) means for producing the transmission signal by means of at least *m* lasers (L), which are each associated with a respective optical transmission spectrum (S1, S2) having *p* associated spectral ranges (F1 to F4; F5 to F8), wherein respectively one spectral range of the transmission signal is suitable for transmitting data in the coherent WDM-PON to an associated active end node of *kₐ* active end nodes, wherein a respective active end node of the *kₐ* active end nodes is associated with a spectral range of the *m* lasers (L) and wherein *kₐ*≤*m·p, m=*{1,2,3,4,...} and *p*={1,2,3,4,...},
(b) means for monitoring the number *kₐ* of active end nodes,
(c) means for reassigning the active end nodes associated with a spectral range of a laser (L2) to be switched off to a respective free spectral range of the remaining lasers (L) if the number of active end nodes is reduced to *kₐ*≤*(m-1)·p,*
(d) means for announcing the new assignment of the spectral ranges by transmitting a message to the end node(s) (11) which are assigned to a laser to be switched off, and
(e) means for switching off the laser (L2) to be switched off,
(f) means for switching on a laser if the number of active end nodes increases to *k*ₐ*>(m*+*1)·p.*

4. The apparatus according to claim 3, further comprising:
means for modulating the optical carrier wave of each of the *m* lasers with an electrical frequency comb so that each optical carrier wave has several electrical subcarriers with spectral ranges (F1 to F4, F5 to F8) for transmitting data to several end nodes (11), wherein the transmission spectra (S1, S2) are arranged successively.

## Revendications

1. Procédé de configuration adaptative d'un signal d'émission dans un WDM-PON (1) cohérent avec une terminaison de ligne optique (10) et plusieurs noeuds terminaux (11), dans lequel le procédé présente les étapes suivantes :
a) production du signal d'émission avec au moins *m* lasers (L) qui sont respectivement affectés à un spectre d'émission (S1, S2) optique avec *p* domaines spectraux (F1 à F4 ; F5 à F8) correspondants, dans lequel respectivement un domaine spectral du signal d'émission est adapté pour transmettre des données dans le WDM-PON cohérent à un noeud affecté parmi kₐ noeuds terminaux actifs, dans lequel respectivement un des *kₐ* noeuds terminaux actifs est affecté à un domaine spectral des *m* lasers (L) et dans lequel *kₐ* ≤ *m · p, m =* {1,2,3,4,...} et *p =* {1,2,3,4,...},
b) surveillance du nombre *kₐ* de noeuds terminaux actifs,
c) si le nombre de noeuds terminaux actifs se réduit à *kₐ* ≤ *(m - 1) · p* :
c1) réorganisation des noeuds terminaux actifs qui sont affectés à un domaine spectral d'un laser (L2) à mettre à l'arrêt vers respectivement un domaine spectral libre des autres lasers (L),
c2) annonce de la nouvelle affectation des domaines spectraux par l'envoi d'un message au/aux noeuds terminaux (11) qui sont affectés à un laser à mettre à l'arrêt,
c3) mise à l'arrêt du laser (L2) à mettre à l'arrêt,
d) si le nombre de noeuds terminaux actifs est augmenté jusqu'à *kₐ > (m* + *1) · p* :
mise en marche d'un laser.

2. Procédé selon la revendication 1, comprenant également l'étape suivante :
modulation de l'onde porteuse optique de chacun des *m* lasers avec un peigne de fréquences électrique de telle sorte que chaque onde porteuse optique présente plusieurs sous-porteuses électriques avec des domaines spectraux (F1 à F4 ; F5 à F8) pour la transmission des données à plusieurs noeuds terminaux (11), dans lequel les spectres d'émission (S1, S2) sont disposés les uns à la suite des autres.

3. Dispositif de configuration adaptative d'un signal d'émission dans un WDM-PON (1) cohérent avec une terminaison de ligne optique (10) et plusieurs noeuds terminaux (11), dans lequel le procédé présente :
a) un système de production du signal d'émission avec au moins *m* lasers (L) qui sont respectivement affectés à un spectre d'émission (S1, S2) optique avec *p* domaines spectraux (F1 à F4 ; F5 à F8) correspondants, dans lequel respectivement un domaine spectral du signal d'émission est adapté pour transmettre des données dans le WDM-PON cohérent à un noeud affecté parmi les kₐ noeuds terminaux actifs, dans lequel respectivement un des *kₐ* noeuds terminaux actifs est affecté à un domaine spectral des *m* lasers (L) et dans lequel *kₐ* ≤ *m · p,* m = {1,2,3,4,...} et *p* = {1,2,3,4,...},
b) un système de surveillance du nombre *kₐ* de noeuds terminaux actifs,
c) un système de réorganisation des noeuds terminaux actifs qui sont affectés à un domaine spectral d'un laser (L2) à mettre à l'arrêt sur respectivement un domaine spectral libre des autres lasers (L) si le nombre de noeuds terminaux actifs se réduit à *kₐ* ≤ *(m - 1) · p,*
d) un système d'annonce de la nouvelle affectation des domaines spectraux par l'envoi d'un message au/aux noeuds terminaux (11) qui sont affectés à un laser à mettre à l'arrêt, et
e) un système de mise à l'arrêt du laser (L2) à mettre à l'arrêt,
f) un système de mise en marche d'un laser si le nombre des noeuds terminaux actifs est augmenté jusqu'à *kₐ >* (m + *1) · p.*

4. Dispositif selon la revendication 3, également avec :
un système de modulation de l'onde porteuse optique de chacun des *m* lasers avec un peigne de fréquences électrique de telle sorte que chaque onde porteuse optique présente plusieurs sous-porteuses électriques avec des domaines spectraux (F1 à F4 ; F5 à F8) pour transmettre les données à plusieurs noeuds terminaux (11), dans lequel les spectres d'émission (S1, S2) sont disposés les uns à la suite des autres.
